(19) Europäisches Patentamt

European Patent Office

Office européen des brevets

(11) EP 2 616 193 B1

## (12) EUROPEAN PATENT SPECIFICATION

(45) Date of publication and mention
of the grant of the patent:
**16.12.2020 Bulletin 2020/51**

(21) Application number: **11758353.4**

(22) Date of filing: **13.09.2011**

(51) Int Cl.:
**B09B 1/00** (2006.01)

(86) International application number:
**PCT/US2011/051434**

(87) International publication number:
**WO 2012/037152 (22.03.2012 Gazette 2012/12)**

## (54) WIND-RESISTANT SYNTHETIC COVER

WINDBESTÄNDIGE SYNTHETISCHE ABDECKUNG

COUVERTURE SYNTHÉTIQUE RÉSISTANTE AU VENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.09.2010 US 382322 P**

(43) Date of publication of application:
**24.07.2013 Bulletin 2013/30**

(73) Proprietor: **Watershed Geosynthetics LLC.
Alpharetta GA 30022 (US)**

(72) Inventors:
• **AYERS, Michael
Alpharetta
GA 30024 (US)**
• **URRUTIA, Jose
Suwanee
GA 30024 (US)**

(74) Representative: **Vleck, Jan Montagu et al
Reddie & Grose LLP
The White Chapel Building
10 Whitechapel High Street
London E1 8QS (GB)**

(56) References cited:
**WO-A2-2008/033516     DE-A1-102006 014 862
US-A- 3 332 828     US-A1- 2005 217 204
US-A1- 2007 009 680**

## Description

The present invention relates to a wind-resistant synthetic cover system for landfills, stockpiles, soil erosion protection, dry ponds, phosphogypsum stacks, environmentally impacted lands, leach pads, ash fills, and similar environmental sites or material stockpiles that require a water-resistant closure system or a plastic rain barrier, wherein the wind-resistant synthetic cover system comprises a composite of a geomembrane covered with a synthetic turf-like cover with upstanding synthetic slender elongate elements.

## BACKGROUND

Environmental covers (or caps) are used to cover landfills, mines, stockpiles and other waste materials to minimize rain infiltration that can contaminate the groundwater table below. These covers often use synthetic liner materials that are typically covered with two feet (about 60 centimetres) of soil that can support natural vegetation. Some of these environmental caps are described in the United States Environmental Protection Agency (40 CFR Sub. D) environmental regulations.

The prescribed covers required by the United States Environmental Protection Agency typically use a two foot (about 60 centimetres) soil layer to cover the impermeable geosynthetic layers below. This soil layer can erode easily under major storm events and can be very difficult to maintain, particularly on the steep slopes of landfills and mine stockpiles.

Environmental covers are also used with geosynthetic liner materials that are not covered with soil. In this case the impermeable geomembrane is exposed to the environment. However this type of exposed geosynthetic cover requires extensive anchoring and or ballasting to protect the cover against wind uplift in the presence of strong winds. The anchoring system can be very extensive resulting in large construction costs. Commonly, exposed covers require the cover to be held down by the use of ropes and tires (ballast) spaced a few feet apart and/or numerous anchor trenches across the slope where ballast material can be placed atop the cover in the anchor trenches to protect the liners against the wind uplift. In other applications sand tubes are used to ballast the geosynthetic liner/synthetic cover against the wind. The exposed geosynthetic liner material also weathers more rapidly as a result of lack of a protective cover.

Exposed impermeable geomembranes have been used for the closures of landfills and various man made stockpiles. However, such covers with an exposed membrane generally have negative aesthetics and require extensive anchoring or ballasting.

Artificial grass or synthetic grass has been extensively used in sports arenas as well as airport runways and general landscaping. However, a primary consideration of artificial turf fields is the ability of the field to drain moisture therethrough, such as to keep the athletic field playable by avoiding puddling. In environmental covers, the opposite is desired. In environmental covers, it is desired that moisture not drain through the cover and environmental covers generally require the use of an impermeable surface to avoid rainfall infiltration through the cover and into the soil below.

The prior art ballasting techniques are expensive, often impractical and their effectiveness is typically limited to winds below about 40 mph (about 65 kph). Additionally, this type of cover only last a few years due to damage from wind. Accordingly, it can be seen that there exists a need for a wind-resistant liner that doesn't require the expense and trouble of ballasts. It is to the provision of solutions to this and other problems that the present invention is primarily directed.

## SUMMARY OF THE INVENTION

WO 2008/033516 discloses a cover system for landfills, stockpiles, soil erosion protection, dry ponds, phosphogypsum stacks, environmentally impacted lands, leach pads, ash fills, and similar environmental sites or material stockpiles that require a water-resistant closure system or a plastic rain barrier, wherein the wind-resistant synthetic cover system comprises: a composite of one or more geotextiles that are tufted with synthetic polymeric slender elongate elements and an impermeable geomembrane; the synthetic slender elongate elements having a length ranging between 0.5 inches (about 1.25 centimetres) and 4 inches (about 10 centimetres).

The present invention provides a wind-resistant synthetic cover system as defined in Claim 1.

Preferably the synthetic slender elongate elements comprise polyethylene or polypropylene fibers and may comprise blade-elements having the appearance of blades of grass.

The system does not rely on piled-on weight to resist wind forces and the cover of the present invention can be deployed over a large area with little or no ballasting or anchoring. This new cover breaks up the airflow over the cover, providing wind uplift resistance.

Optionally, the cover includes vertical filaments attached to a liner to break the wind aero-dynamics on the exposed cover. With this system, it is believed that the wind velocity on the impermeable surface (membrane) now becomes turbulent near the surface of the cover, thus greatly reducing the actual wind velocity at the liner surface and decreasing associated uplift.

The reaction of the slender elongate elements to the wind forces may also create a downward force on the membrane. This reaction may be caused by the filaments applying an opposing force against the wind which is transferred as a downward force on the membrane. The use of vertical slender elongate elements amounts to a radical departure from the typical exposed membranes or liners. Optional examples of slender elongate elements contemplated as encompassed by the present invention or in conjunction therewith include structures that resemble blades of grass, rods, filaments, tufts, follicle-like elements, fibers, narrow cone-shaped elements, etc.

Advantageously, the wind-resistant cover in this invention can create a larger distance from the material surface to the "free stream" (free stream occurs where the wind flow is unaffected by the material). The cover breaks up the flow stream, increasing the boundary layer (distance from surface to free stream) to the point where uplift forces are very small. This is in stark contrast to a prior art cover with an exposed membrane, where there is a minuscule distance to the uninterrupted free-stream air flow. This small boundary means that there is a large velocity differential over a very short distance creating much higher uplift.

The positive/downward force is a result of a reaction of the synthetic cover, with the individual blades acting as spring pushing against the wind. This reaction and opposing force will vary based on the type of cover and the length of the synthetic blade of grass. The blade will be shorter or longer depending on the wind design flow for the disruption provided by the synthetic cover of this invention.

The synthetic cover portion of this environmental closure also acts as a protective layer providing protection from physical damage and weathering to the geomembrane liner below. Thus, the present invention can extend the longevity of the geomembrane component over a much longer period of time in comparison with the conventional exposed geomembrane covers.

This invention, in a preferred form, uses a lower geomembrane with roughened or structural components to increase the friction resistance against the lower soil and interface friction between the cover and the geomembrane. Preferably, the angle of friction can be higher than 18 degrees.

Alternatively, the liner can also be affixed to the cover by spraying polypropylene or polyethylene to the back of tufted or knitted geotextile(s).

BRIEF DESCRIPTION OF THE DRAWING FIGURES

Figure 1 is a schematic view of prior art environmental cover as per the United States Environmental Protection Agency where the anchoring of the impermeable geosynthetic membrane consists of a two foot (about 60 centimetres) soil cover.

Figure 2 is a schematic view of a second prior art environmental cover with exposed geomembranes that require extensive anchoring to resist wind uplift.

Figure 2.1 depicts prior art arrangements and in general shows a cross sectional view of anchor trenches used along the slope of an exposed geomembrane cover to secure it in place in the face of wind which would otherwise tend to lift the cover.

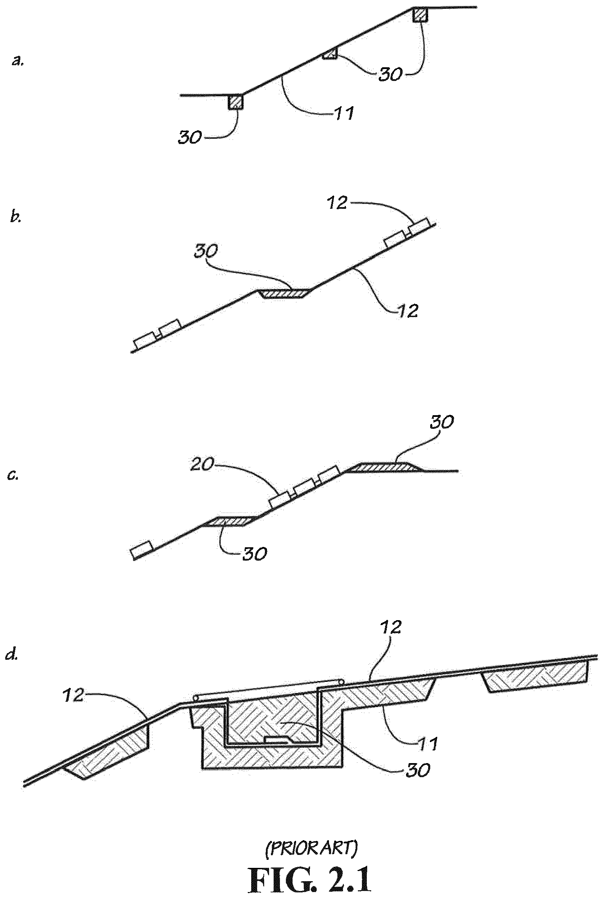

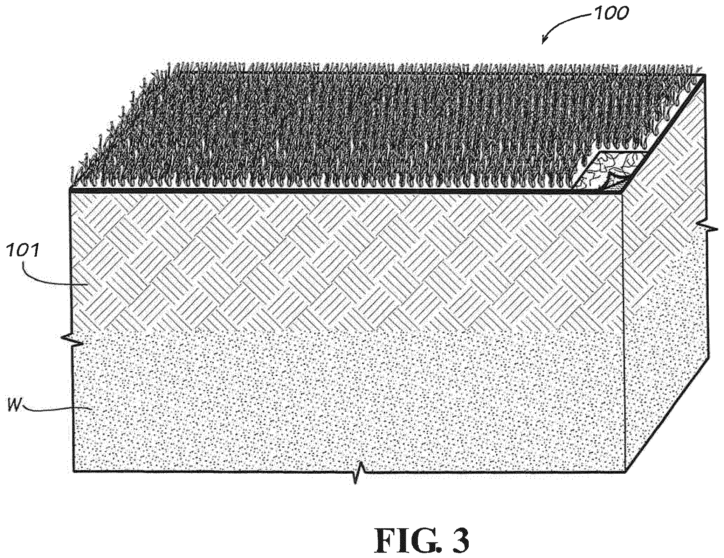

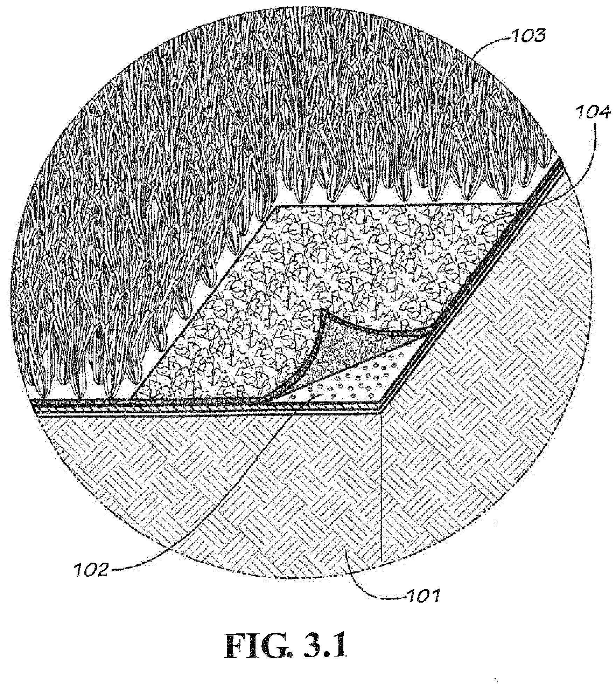

Figures 2A, 2B, 3, 3.1, 4, and 5 consist of schematic views of a wind-resistant environmental cover/liner according to a first preferred form of the present invention.

DETAILED DESCRIPTION OF THE PREFERRED EXAMPLE EMBODIMENTS

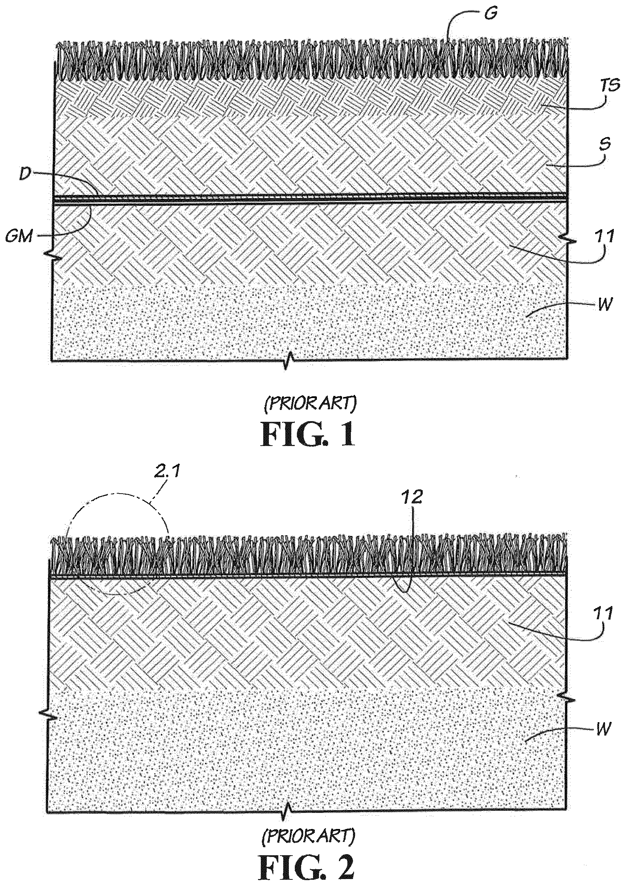

Figure 1 depicts a cross sectional view of a typical cover system as described in current United States Environmental Protection Agency federal regulations and as used in the covers for landfills and mines. In this case the two feet (about 60 centimetres) of soil is used to cover the geomembrane against wind uplift. As shown, the waste W is covered by eighteen inches (about 45 centimetres) of soil (11), then a 40 mil. (1mm) geomembrane GM, a geocomposite drainage media D, eighteen more inches (about 45 centimetres) of soil S, six inches (about 15 centimetres) of topsoil TS, and finally vegetive grass G.

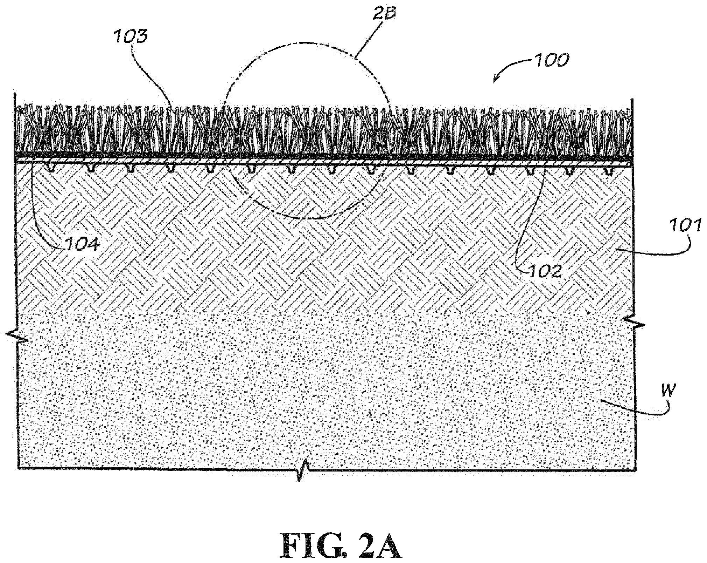

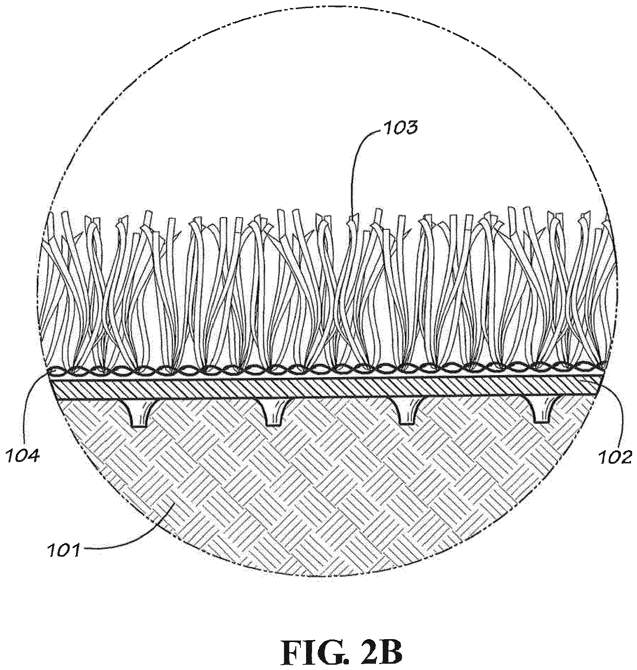

Figure 2 depicts a prior art cover where the geomembrane is exposed to the environment. The system requires extensive anchoring in order to resist wind uplift forces. As shown, the waste W is covered by eighteen inches (about 45 centimetres) of soil S and an exposed geomembrane 12.

Figure 2.1 depicts prior art covers of exposed geomembrane arrangements and in general shows a cross sectional view of anchor trenches (30) used along the slope of an exposed geomembrane cover to secure it in place in the face of wind which would otherwise tend to lift the cover. The figure shows the geomembrane/raincoat cover (12), and the use of tires (20) tied with ropes as additional ballasting system of the exposed geomembrane (12). This type of prior art anchoring required to resist uplift is very expensive and it is not aesthetically pleasant.

Figure 2A and 2B schematically depict the current invention over waste W covered with soil (101) with an exposed geomembrane or raincoat liner (102) covered with synthetic strands (103) that resemble grass with a pile height ranging from about ¾ inch to 2 inches (about 2 centimetres to about 5 centimetres) depending on wind design velocities. The strands (103) tend to break the laminar flow of the wind and also provide normal pressure on the geomembrane liner system when the strands bend onto the liner, creating normal pressure. Preferably, the pile height is ¾ inch to 2 inches (about 2 centimetres to about 5 centimetres) or so. More preferably, the pile height is about 1 inch to 1-1/2 inches (about 2-1/2 centimetres to about 4 centimetres).

The synthetic strands (103) are slender elongate elements. As used herein, "slender" indicates a length that is much greater than its transverse dimension(s). In accordance with the invention, the slender elongate elements have a length ranging between 1.25 cm (0.5 inches) and 10 cm (4 inches). Examples of slender elongate elements contemplated as encompassed by the present invention or in conjunction therewith are structures that resemble blades of grass, rods, filaments, tufts, follicle-like elements, fibers, narrow cone-shaped elements, etc. The synthetic strands extend upwardly from a base and form a mat or field of such strands. Such can simulate a field of grass, pine straw or similar. Moreover, while the invention will be described below in connection with blade-like elements (grass blade-like, not necessarily like cutting blades) as an example embodiment, those skilled in the art will readily appreciate that the invention is not to be limited to the example form.

Preferably, the chemical composition of the synthetic grass blades (103) should be selected to be heat-resistant and UV-resistant (and to withstand exposure to sunlight, which generates heat in the blades and contains ultraviolet rays). Furthermore, the polymer yams (103) should not become brittle when subjected to low temperatures. The selected synthetic grass color and texture should be aesthetically pleasing. While various other materials may work well for the grass blades, it is presently believed that polyethylene fibers work best.

Optionally, the synthetic grass blades (103) are tufted to have a density of between about 20 ounces/square yard (about 0.7 kilograms/square metre) and about 100 ounces/square yard (about 3.5 kilograms/square metre). Preferably, the synthetic grass blades have a density of between about 20 and 40 ounces/square yard (about 0.7 and about 1.5 kilograms/square metre). The tufting is fairly homogeneous. In general, a "loop" is inserted at a gauge spacing to achieve the desired density. Each loop shows as two blades of grass at each tufted location. Preferably, the synthetic grass blades have a thickness of at least about 100 microns.

The synthetic grass blades (103) are tufted into the geotextile backing (104). The geotextile backing preferably consists of one or more geotextiles made of polypropylene or polyethylene with UV stabilizers. The geotextiles can comprise slit film (tape yarn) or monofilament. Generally speaking, the lower the surface area of the yarn per unit weight of raw material, the better the ultraviolet (UV) performance. Monofilament geotextiles typically have a small cross section relative to their length, which inherently provides for a smaller surface exposed to UV light per unit weight of polypropylene or polyethylene. In other words, a yarn with a round cross-section typically will exhibit better UV resistance than a flat geometric shape.

Optionally, the geotextile backing (104) can be a single layer backing, a double layer backing, or can have more than two layers. But it is preferred that a single layer or double layer backing be used. Optionally, the backing can be made of polypropylene or polyethylene. Also, optionally a separate membrane can be dispensed with, such as by applying a membrane-like layer to the back side of the synthetic geotextile. For example, a urethane coating can be sprayed onto the back of the synthetic geotextile and allowed to cure.

The prior art technique of using tarps or geomembranes to cover leach pads, landfills and stockpiles to protect the ore, waste and soil stockpiles from rain and weather damage typically requires substantial ballast or anchorage as shown on **Figure 2.1.** This new invention allows the use of a membrane over large areas without such ballast or anchorage. Instead, a synthetic cover layer (100) is provided that can resist wind uplift and thus protecting the impermeable geomembrane (102) below. The synthetic cover (100, 103) contains grass-like filaments covering and protecting the impermeable geomembrane liner surface.

The inventive wind-resistant cover and liner was laboratory tested (at the Georgia Tech Research Institute ("GTRI") Wind Tunnel Lab) using wind tunnels to determine the uplift vertical pressures and shear pressures on the synthetic cover. The wind tunnel trials indicated that this novel cover resists the uplift forces of the wind. Minimal product weight of 1.46 kg/m$^2$ (0.3 lbs/sqft) typically will be required to counteract the shear forces from the wind. Synthetic grass and geomembranes in the range of 30 to 40mil (0.8 to 1 mm) thickness would exceed this minimum weight-per-unit area threshold. The present inventors have confirmed the performance of this novel cover by testing the same as landfill covers for mines and general covers for ore stockpiles, dams, embankments, general stockpiles and the like.

During the wind tunnel investigation, the inventors of this idea experimentally evaluated the aerodynamic properties and ballast requirements of the novel synthetic ground cover system under a range of wind speed conditions. The cover system was tested full scale in a subsonic model test facility wind tunnel wherein the normal forces loading) (lbs/sq ft) (kg/ m$^2$ and the shear stresses (lbs/sq ft) (kg/ m$^2$) were determined for the proposed section of the materials (synthetic cover and geomembrane) as described herein.

Pressure variations across the height of a boundary layer were measured in the wind tunnel. Pressure variations are due to viscous forces. In order to investigate the unique characteristics of the flexible and permeable cover layer (100) a traverse system was built into the model to actuate a pitot static probe vertically through the boundary layer. This allowed the measurement of the total and static pressure as a function of the probe height defined as h=0 at the upper surface of the geomembrane or geotextile backing. From these measurements the flow velocity was determined. This characterized the shape of the boundary layer that is by its nature a transition from the no slip condition at the surface (v=0) to the free stream.

A sophisticated 6-component force balance was utilized to measure the aerodynamic lift (L) and the total drag (D). These forces were transmitted to the balance through a vertical strut mounted underneath the model base. These forces represent the total sum of all pressure distribution acting on the model resolved vertically and tangentially as shown in the equation below:

$$L_{cover} = L - L_{amb} + L_{geotex/geome}$$

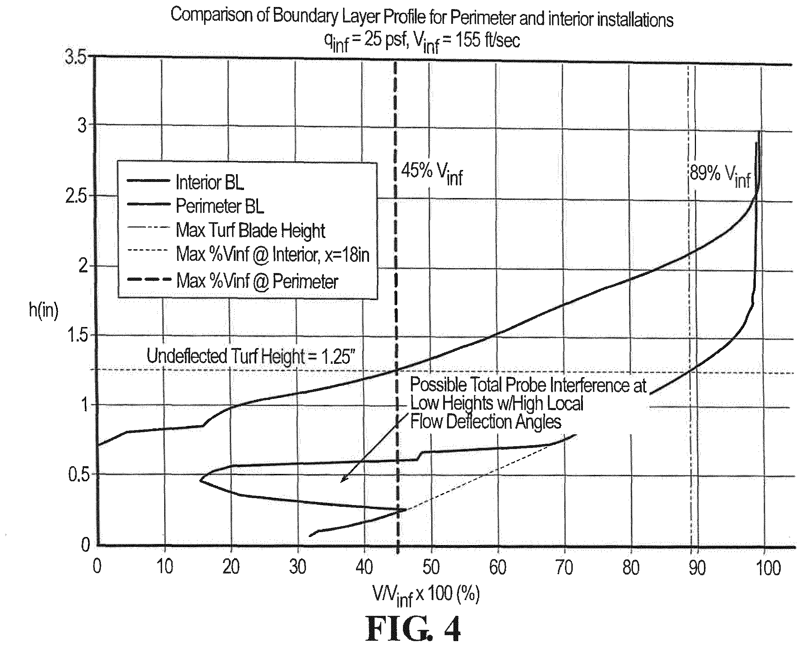

**Figure 4** shows the boundary layer profile for two conditions. The lower curve shows the wind profile at the edges and the upper curves represents the wind profile in the interior conditions of the cover defined in this invention. At the edges the wind subjects the cover (103) to up to 89% of the total free stream. The blades are subject to higher velocities and thus higher increasing drag as the wind speed increases. The higher drag increases the bending of the blades back onto the backing geotextile(s) (104). The effect of this has two counteracting impacts on the net lift. At lower velocities the synthetic blades (103) are bent slightly with flow being deflected and accelerated over the edges. This flow acceleration increases the local velocity and lowers the local static pressure below that of the stream static, which creates the pressure differential building up with the associated uplift of the cover geotextiles (104). This force can be counteracted by building an anchor trench at the perimeter of the cover.

For the interior condition **Figure 4** (upper curve) approximately 18 inches (about 45 centimetres) from the edge, the curve is drastically different than the perimeter boundary. Compared with the perimeter profile it is 25% thicker with no measurable velocity until the height is greater than 50% of the cover length. The blades (103) therefore experience a maximum 45% of the free stream velocity. This reduces the drag action on the cover layer. Furthermore, the static pressure remains constant as a function of height through the boundary which effectively prevents the formation of pressure differential (i.e., no uplift) at the geomembrane/ geotextile surface.

The wind-resistant cover of this invention creates a larger distance from the material surface to the "free stream" (free stream occurs where the wind flow is unaffected by the material). The cover radically breaks up the flow stream, increasing the boundary layer (distance from surface to free stream) to the point where uplift forces are very small. This is in stark contrast to a prior art exposed membrane cover, in which there is a minuscule distance from the surface (where velocity is 0 feet per second (m/s), which is the case for all materials and wind conditions) to free stream.

The boundary layer conditions are created by longer flow paths over a given surface and all boundaries grow in thickness and increase in turbulence with increasing distance. In the case of this invention, the interaction of the flow with the flexible blades causes the boundary layer growth to occur quite rapidly. It is also clearly seen in our experiments that little to no deflection occurred in the cover at a distance just over 6 inches (about 15 centimetres) from the perimeter edge. The measured uplift results show values requiring minimal uplift resistance that can simply be achieved by the weight of the cover itself.

Exposed geomembrane covers have been used extensively in the past as covers for landfills and stockpiles in the solid waste and mining industries in order to prevent or minimize rainwater infiltration into the waste or the ore. In such prior art geomembrane applications, UV-resistance of the liner materials has not been a concern when HDPE and LLDPE, PVC materials are used as the plastic materials. For the synthetic grass used in the present invention, the blades can be made of polyethylene, HDPE, LLDPE, PVC, or other UV-resistant material. While UV resistance is not an absolute requirement, it does provide an important long-term stability for the synthetic grass blades, adding to the overall performance of the system.

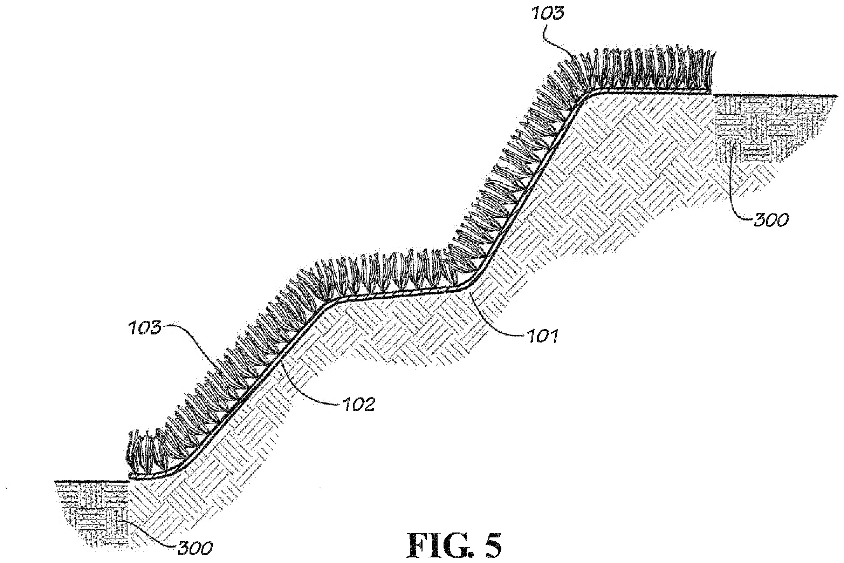

**Figure 5** shows synthetic strands (103) over a geomembrane (102) atop subgrade soil (101), with anchor trenches (300) at the leading edges only.

It is to be understood that this invention is not limited to the specific devices, methods, conditions, or parameters described and/or shown herein, and that the terminology used herein is for the purpose of describing particular embodiments by way of example only. Thus, the terminology is intended to be broadly construed and is not intended to be limiting of the claimed invention. For example, as used in the specification including the appended claims, the singular forms "a," "an," and "one" include the plural, the term "or" means "and/or," and reference to a particular numerical value includes at least that particular value, unless the context clearly dictates otherwise. In addition, any methods described herein are not intended to be limited to the sequence of steps described but can be carried out in other sequences, unless expressly stated otherwise herein.

While the invention has been shown and described in exemplary forms, itwill be apparent to those skilled in the art that many modifications, additions, and deletions can be made therein without departing from the scope of the invention as defined by the following claims.

**Claims**

1. A wind-resistant synthetic cover system for landfills, stockpiles, soil erosion protection, dry ponds, phosphogypsum stacks, environmentally impacted lands, leach pads, ash fills, and similar environmental sites or material stockpiles that require a water-resistant closure system or a plastic rain barrier, wherein the wind-resistant synthetic cover system comprises:

   a composite of one or more geotextiles (104) that are tufted with synthetic polymeric slender elongate elements (103) and an impermeable geomembrane (102) which is comprised of a polymeric material;

wherein the synthetic slender elongate elements (103) have a length ranging between 1.25 cm (0.5 inches) and 10 cm (4 inches); and have a density of between about 0.51 kg/m$^2$ (about 15 ounces/square yard) and about 4.07 kg/m$^2$ (about 120 ounces/square yard);

and the wind-resistant synthetic cover system has a weight of at least 1.46 kg/m$^2$ (0.3 lbs/square foot) in the absence of subterranean anchoring and/or ballast system or sand in-fill; such that when the wind-resistant synthetic cover system is exposed to wind, uplift of the wind-resistant synthetic cover system is resisted by the weight of the material of the wind-resistant synthetic cover system itself without the need for subterranean anchoring and/or ballast system or sand in-fill.

2. The wind-resistant synthetic cover system as claimed in Claim 1 wherein the synthetic slender elongate elements (103) comprise polyethylene or polypropylene fibers.

3. The wind-resistant synthetic cover system as claimed in Claim 1 wherein the synthetic slender elongate elements (103) comprise blade-like elements having the appearance of blades of grass.

4. The wind-resistant synthetic cover system of Claim 1 wherein the geomembrane (102) is selected from the group consisting of high density polyethylene, linear low density polyethylene or polyvinyl chloride.

5. The wind-resistant synthetic cover system of Claim 1 wherein the wind-resistant synthetic cover system comprises UV-resistant material.

6. The wind-resistant synthetic cover system of Claim 1 wherein the synthetic polymeric slender elongate elements (103) comprise vertical filaments attached to a geotextile backing (104) to create wind aerodynamic conditions that prevent uplift of the exposed cover and impermeable geomembrane (102) below.

7. The wind-resistant synthetic cover system of Claim 6 wherein the geomembrane (102) is sprayed or applied directly on the geotextile backing (104) of the cover.

8. The wind-resistant synthetic cover system of Claim 1 wherein the synthetic slender elongate elements (103) comprise monofilament fibers or slit film.

9. The wind-resistant synthetic cover system of any preceding claim wherein the synthetic slender elongate elements (103) have a blade length ranging between about 2.5 cm (about 1 inch) to about 4.0 cm (about 1.5 inches).

**Patentansprüche**

1. Windbeständiges synthetisches Abdeckungssystem für Mülldeponien, Lagerhalden, Bodenerosionsschutz, Rückhaltebecken, Phosphorgipsstapel, belastete Grundstücke, Laugungsfelder, Auffüllungen mit Asche und ähnliche ökologische Standorte oder Materialhalden, die ein wasserbeständiges Verschlusssystem oder einen Plastik-Regenschutz benötigen, wobei das windbeständige synthetische Abdeckungssystem Folgendes aufweist:

einen Verbundstoff aus ein oder mehr Geotextilien (104), die mit schlanken länglichen synthetischen polymeren Elementen (103) getuftet sind, und einer undurchlässigen Geomembran (102), die ein polymeres Material umfasst;

wobei die synthetischen schlanken länglichen Elemente (103) eine Länge haben, die von 1,25 cm (0,5 Zoll) bis 10 cm (4 Zoll) reicht; und eine Dichte zwischen etwa 0,51 kg/m$^2$ (etwa 15 Unzen/Quadratyard) und etwa 4,07 kg/m$^2$ (etwa 120 Unzen/Quadratyard) haben;

und das windbeständige synthetische Abdeckungssystem in Abwesenheit einer unterirdischen Verankerung und/oder eines Ballastsystems oder einer Sandverfüllung ein Gewicht von wenigstens 1,46 kg/m$^2$ (0,3 Pfund/Quadratfuß) hat;

so dass, wenn das windbeständige synthetische Abdeckungssystem Wind ausgesetzt wird, das Gewicht des Materials des windbeständigen synthetischen Abdeckungssystems selbst einer Hebung des windbeständigen synthetischen Abdeckungssystems entgegenwirkt, ohne dass eine unterirdische Verankerung und/oder ein Ballastsystem oder eine Sandverfüllung benötigt wird.

2. Windbeständiges synthetisches Abdeckungssystem nach Anspruch 1, wobei die synthetischen schlanken länglichen Elemente (103) Polyethylen- oder Polypropylenfasern umfassen.

3. Windbeständiges synthetisches Abdeckungssystem nach Anspruch 1, wobei die synthetischen schlanken länglichen Elemente (103) halmartige Elemente sind, die das Aussehen von Grashalmen haben.

4. Windbeständiges synthetisches Abdeckungssystem nach Anspruch 1, wobei die Geomembran (102) aus der Gruppe bestehend aus Polyethylen hoher Dichte, linearem Polyethylen niedriger Dichte oder Polyvinylchlorid ausgewählt ist.

5. Windbeständiges synthetisches Abdeckungssystem nach Anspruch 1, wobei das windbeständige synthetische Abdeckungssystem UV-beständiges Material aufweist.

6. Windbeständiges synthetisches Abdeckungssystem nach Anspruch 1, wobei die synthetischen polymeren schlanken länglichen Elemente (103) vertikale Filamente aufweisen, die an einem geotextilen Rückenmaterial (104) angebracht sind, um windaerodynamische Bedingungen zu schaffen, die das Heben der freiliegenden Abdeckung und der undurchlässigen Geomembran (102) darunter verhindern.

7. Windbeständiges synthetisches Abdeckungssystem nach Anspruch 6, wobei die Geomembran (102) direkt auf das geotextile Rückenmaterial (104) der Abdeckung aufgesprüht oder aufgebracht wird.

8. Windbeständiges synthetisches Abdeckungssystem nach Anspruch 1, wobei die synthetischen schlanken länglichen Elemente (103) Monofilament-Fasern oder Schlitzfolie umfassen.

9. Windbeständiges synthetisches Abdeckungssystem nach einem der vorhergehenden Ansprüche, wobei die synthetischen schlanken länglichen Elemente (103) eine Halmlänge haben, die von etwa 2,5 cm (etwa 1 Zoll) bis etwa 4,0 cm (etwa 1,5 Zoll) reicht.

**Revendications**

1. Système de couverture synthétique résistante au vent pour remblais en terre, stocks de réserve, protection contre l'érosion du sol, bassins secs, piles de phosphogypse, terres ayant subi l'impact de l'environnement, remblais de lixiviation, remblais de cendres, et sites environnementaux semblables ou stocks de réserve de matériaux qui exigent un système de fermeture résistant à l'eau ou une barrière en plastique contre la pluie, où le système de couverture synthétique résistante au vent comprend :

un composite d'un ou de plusieurs géotextiles (104) qui sont touffetés avec de minces éléments polymères synthétiques allongés (103) et une géomembrane imperméable (102) qui est constituée d'un matériau polymère ;
dans lequel les minces éléments synthétiques allongés (103) ont une longueur faisant entre 1,25 cm (0,5 pouce) et 10 cm (4 pouces) ; et ont une densité d'entre environ 0,51 kg/m$^2$ (environ 15 onces/yard carré) et environ 4,07 kg/m$^2$ (en-

viron 120 onces/yard carré) ;
et le système de couverture synthétique résistante au vent a un poids d'au moins 1,46 kg/m$^2$ (0,3 livres/pied carré) en l'absence d'ancrage souterrain et/ou de système de ballast ou de remplissage de sable ;
de telle sorte que lorsque le système de couverture synthétique résistante au vent est exposé au vent, le système de couverture synthétique résistante au vent résiste au soulèvement grâce au poids du matériau du système de couverture synthétique résistante au vent en soi sans le besoin d'ancrage souterrain et/ou de système de ballast ou de remplissage de sable.

2. Système de couverture synthétique résistante au vent selon la revendication 1, dans lequel les minces éléments synthétiques allongés (103) comprennent des fibres de polyéthylène ou de polypropylène.

3. Système de couverture synthétique résistante au vent selon la revendication 1, dans lequel les minces éléments synthétiques allongés (103) comprennent des éléments comme des brins ayant l'aspect de brins d'herbe.

4. Système de couverture synthétique résistante au vent selon la revendication 1, dans lequel la géomembrane (102) est sélectionnée parmi le groupe consistant en polyéthylène haute densité, polyéthylène linéaire faible densité ou chlorure de polyvinyle.

5. Système de couverture synthétique résistante au vent selon la revendication 1, où le système de couverture synthétique résistante au vent comprend un matériau résistant aux UV.

6. Système de couverture synthétique résistante au vent selon la revendication 1, dans lequel les minces éléments polymères synthétiques allongés (103) comprennent des filaments verticaux attachés à un renfort en géotextile (104) afin de créer des conditions aérodynamiques au vent qui empêchent le soulèvement de la couverture exposée et de la géomembrane imperméable (102) en dessous.

7. Système de couverture synthétique résistante au vent selon la revendication 6, dans lequel la géomembrane (102) est pulvérisée ou appliquée directement sur le renfort en géotextile (104) de la couverture.

8. Système de couverture synthétique résistante au vent selon la revendication 1, dans lequel les minces éléments synthétiques allongés (103) comprennent des fibres monofilaments ou du film fendu.

9. Système de couverture synthétique résistante au vent selon l'une quelconque des revendications précédentes, dans lequel les minces éléments synthétiques allongés (103) ont une longueur de brin faisant d'entre environ 2,5 cm (environ 1 pouce) à environ 4,0 cm (environ 1,5 pouce).

EP 2 616 193 B1

(PRIOR ART)

FIG. 1

(PRIOR ART)

FIG. 2

9

a.

b.

c.

d.

# FIG. 2.1

**FIG. 2A**

EP 2 616 193 B1

**FIG. 2B**

**FIG. 3**

EP 2 616 193 B1

103

104

102

101

**FIG. 3.1**

Comparison of Boundary Layer Profile for Perimeter and interior installations
$q_{inf}$ = 25 psf, $V_{inf}$ = 155 ft/sec

**FIG. 4**

EP 2 616 193 B1

**FIG. 5**

EP 2 616 193 B1

**EP 2 616 193 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008033516 A